# EUROPÄISCHE PATENTSCHRIFT

(11) **EP 0 394 870 B1**
(45) Veröffentlichungstag und Bekanntmachung des Hinweises auf die Patenterteilung: **13.10.1993**
(21) Anmeldenummer: 90107544.0
(22) Anmeldetag: 20.04.1990
(51) Int. Cl.: G01N 21/37, G01N 21/61

(54) **Nichtdispersiver Infrarot-Gasanalysator**
Non-dispersive infrared gas analyzer
Analyseur de gaz à infrarouges non-dispersif

(30) Priorität: 25.04.1989 DE 8905226 U
(43) Veröffentlichungstag der Anmeldung: 31.10.1990
(73) Patentinhaber: SIEMENS AKTIENGESELLSCHAFT, 80333 München (DE)
(72) Erfinder: Weinel, Johann, Dipl.-Ing., D-7500 Karlsruhe 21 (DE)

(56) Entgegenhaltungen:
- EP-A- 226 855
- EP-A- 0 022 246
- DE-A- 2 808 033
- DE-A- 2 827 230
- DE-A- 3 529 482
- DE-C- 967 633
- GB-A- 645 576
- US-A- 3 770 974

## Beschreibung

Die Erfindung bezieht sich auf einen nichtdispersiven Infrarot-(NDIR)-Gasanalysator mit den Merkmalen des Oberbegriffs des Anspruchs.

In der US-Patentschrift 3 770 974 ist ein Gasanalysator beschrieben, der zwei pneumatische Detektoren enthält, deren Ausgangssignale einem Differenzverstärker zugeführt sind. Dem zweiten Detektor ist zur Verminderung der Querempfindlichkeit und mechanischer Störeffekte ein Gasfilter mit der zu messenden Komponente und einem Störgas vorgeschaltet. Die Konzentration der Meßgaskomponente ist in den beiden Detektoren unterschiedlich, und zwar in dem ersten Detektor niedriger als in dem zweiten. Die beiden Detektoren bilden einen sogenannten Zweischicht-Detektor. der eine geringere Querempfindlichkeit als ein Einschicht-Detektor aufweist.

Aus der deutschen Offenlegungsschrift 28 27 230 ist ebenfalls ein Gasanalysator bekannt, der zur Verminderung der Querempfindlichkeit einen Doppelschicht-Detektor enthält.

In der europäischen Patentanmeldung 226 855 ist angegeben, zur Linearisierung der Kennlinie eines Gasanalysators mit einem pneumatischen Detektor zwischen die Meß- und Vergleichsküvette einerseits und den Detektor andererseits ein pneumatisches Filter einzusetzen.

Ein weiterer Gasanalysator ist beispielsweise aus der GB-PS 645 576 bekannt. Dort sind zwei oder mehr pneumatische Detektoren in den Strahlengängen hintereinandergeschaltet, deren Kammern jeweils eine der Gaskomponenten des als Gasgemisch vorliegenden Meßgases enthalten. Es ist so möglich, gleichzeitig oder nacheinander den Anteil verschiedener Gase im Meßgasgemisch zu bestimmen.

Der Erfindung liegt jedoch ein anderes Problem zugrunde.
Bei linear an steigender Konzentration der zu messenden Komponente folgt das Absorptionsverhalten einer exponentiellen Funktion, d. h., mit steigender Konzentration verringert sich der Meßwertzuwachs. Die Kennlinie des Analysators wird unlinear, so daß die Messung sehr unterschiedlich hoher Gaskonzentration mit ein und demselben Analysator ohne Austausch der selektiven Detektoren nicht mit der geforderten Genauigkeit möglich ist.

Es besteht die Aufgabe, einen NDIR-Gasanalysator so auszubilden, daß der Meßbereichsumfang für eine bestimmte Gaskomponente erheblich erweitert wird ohne Einbuße an Meßgenauigkeit.

Eine Lösung der Aufgabe wird in einem NDIR-Gasanalysator gesehen, der die Merkmale des Anspruchs aufweist.
Durch elektrisches Umschalten der Detektorausgänge kann der Meßbereich um mehrere Zehnerpotenzen erweitert werden, beispielsweise von 10 ppm CO bis 10 % CO.

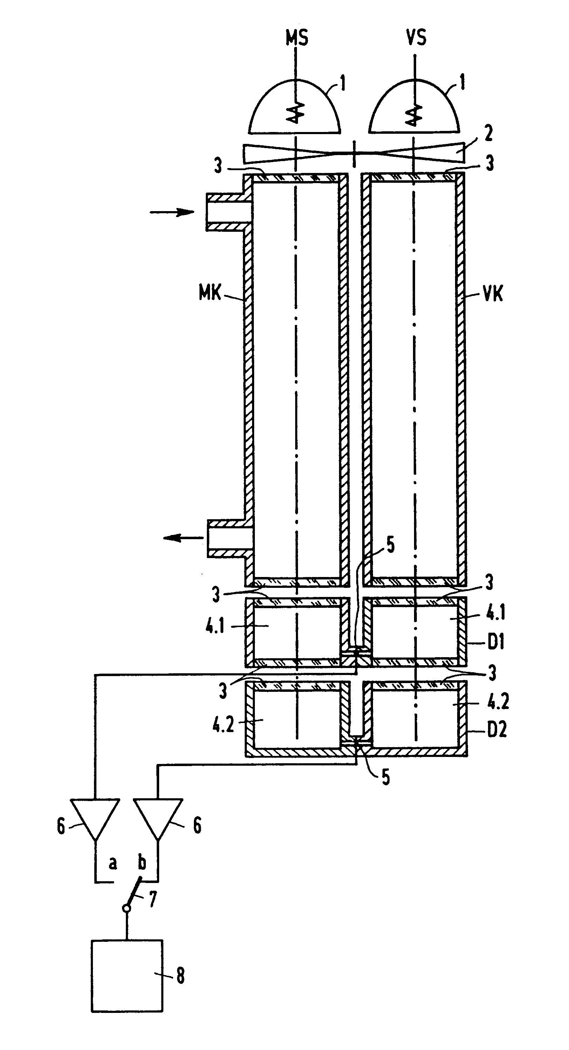

Aufbau und Funktion eines derartigen Gasanalysators wird im folgenden anhand der Figur, die ein Ausführungsbeispiel zeigt, beschrieben.

In der Figur ist ein NDIR-Gasanalysator von dem bekannten Zweistrahl-Typ dargestellt, mit einem Meßstrahlengang MS und einem Vergleichsstrahlengang VS, denen jeweils ein Infrarot-Strahler 1 zugeordnet ist. Der Analysator arbeitet mit Strahlmodulation mit Hilfe eines rotierenden Strahlmodulators 2.
In dem Meßstrahlengang MS folgt die Meßküvette MK, die von einem als Meßgas bezeichneten Gasgemisch durchströmt wird.
In der parallel dazu angeordneten Vergleichsküvette VK befindet sich ein nicht absorbierendes Vergleichsgas.
Beide Küvetten sind an ihren Stirnseiten mit strahldurchlässigen Fenstern 3 abgeschlossen.

Auf die Küvetten folgen in den Strahlengängen zwei pneumatische Detektoren D1 und D2. Jeder der Detektoren ist in bekannter Weise aus zwei Kammern 4.1 bzw. 4.2 aufgebaut, die jeweils in einer sie verbindenden Leitung einen Druck- oder Strömungsfühler 5 aufweisen, der die meßwertproportionalen Druck- oder Strömungsschwankungen in elektrische Ausgangsgrößen umsetzt, die über die Verstärker 6 und einen Umschalter 7 einem Auswertegerät 8 zugeführt werden. Beide Stirnseiten der Kammern 4 des Detektors D1 sowie die oberen Stirnseiten der Kammern 4.2 des Detektors D2 sind mit strahldurchlässigen Fenstern 3 versehen.

Die Gasfüllungen der Kammern 4.1, 4.2 enthalten ein der zu bestimmenden Gaskomponente absorptionsmäßig entsprechendes Gas, z. B. CO, dessen Konzentration in den Kammern 4.1 des ersten Detektors D1 relativ gering ist, z. B. 20 %, während sie in den Kammern 4.2 des zweiten Detektors D2 relativ hoch ist, beispielsweise 90 %.

Ist der Anteil der zu bestimmenden Gaskomponente in dem die Meßküvette MK durchströmenden Meßgas gering, wird mit dem Detektor D1 gemessen, d. h., der Umschalter 7 ist in der Schaltstellung a.

Ist der Anteil der zu bestimmenden Komponente im Meßgas höher, so wird durch Umschalten auf die Schaltstellung b Detektor D2 wirksam geschaltet und somit der Meßbereich nach oben erweitert. Gleichzeitig wirkt die Gasfüllung in den Kammern 4.1 des Detektors D1 in diesem Falle als vorabsorbierendes Filter, wodurch die Kennlinie linearisiert wird.

## Patentansprüche

1. Nichtdispersiver Infrarot-Gasanalysator mit mindestens
- einer IR-Strahlungsquelle (1),
- einem Strahlmodulator (2),
- einer im Meßstrahlengang liegenden, ein Gasgemisch, das das Meßgas darstellt, enthaltenden Meßüvette (MK),
- einer im Vergleichsstrahlengang liegenden, Vergleichsgas enthaltenden Vergleichsküvette (VK),
- zwei in Strahlrichtung hintereinander angeordneten selektiven, pneumatischen Detektoren (D1, D2), jeder bestehend aus je einer im Meßstrahlengang und im Vergleichsstrahlengang nach den Küvetten angeordneten gasgefüllten Kammer (4.1; 4.2),
wobei die beiden Kammern eine Detektors jeweils über eine einen Druck- oder Strömungsfühler (5) enthaltende Leitung miteinander in Verbindung stehen, wobei die Kammern (4.1) des in Strahlrichtung ersten Detektors (D1) ein der zu bestimmenden Meßgaskomponente absorptionsmäßig entsprechendes Gas in geringer Konzentration und die Kammern (4.2) des in Strahlrichtung zweiten Detektors (D2) ein solches Gas in höherer Konzentration enthalten ,
- einem Auswertegerät (8) zum Auswerten der Ausgangssignale der Druck- oder Strömungsfühler,
**dadurch gekennzeichnet,**
daß in Abhängigkeit von der Konzentration der zu bestimmenden Meßgaskomponente der Ausgang jeweils eines der Druck- oder Strömungsfühler (5) wahlweise an das Auswertegerät (8) schaltbar ist.

## Claims

1. Non-dispersive infrared gas analyzer having at least
- an infrared radiation source (1),
- a radiation modulator (2),
- a measuring vessel (MK) situated in the path of the measuring radiation and containing a gas mixture which represents the measured gas,
- a reference vessel (VK) situated in the path of the reference radiation and containing reference gas,
- two selective pneumatic detectors (D1, D2) arranged one after another in the direction of radiation, each of which consists of a respective gas-filled chamber (4.1; 4.2) arranged in the path of the measuring radiation and in the path of the reference radiation, after the vessels, whereby the two chambers of a detector are connected together by way of a line containing a pressure or flow sensor (5), whereby the chambers (4.1) of the first detector (D1) in the direction of radiation contain a low concentration of a gas corresponding in respect of absorption to the measured gas constituents to be analyzed, and the chambers (4.2) of the second detector (D2) in the direction of radiation contain a higher concentration of such a gas,
- an evaluation device (8) for evaluating the output signals of the pressure or flow sensor,
characterised in that, in dependence upon the concentration of the measured gas constituents to be analyzed, the output of a respective pressure or flow sensor (5) can be selectively connected to the evaluation device (8).

## Revendications

1. Analyseur de gaz à infrarouge non dispersif, comportant au moins
- une source de rayonnement IR (1),
- un modulateur de faisceau (2),
- une cuvette de mesure (MK), qui contient un mélange gazeux représentant le gaz de mesure et qui est placée sur le trajet du faisceau de mesure,
- une cuvette de référence (VK) qui contient du gaz de référence et qui est placée sur le trajet du faisceau de référence,
- deux détecteurs (D1, D2) pneumatiques sélectifs, disposés l'un après l'autre dans la direction du faisceau, chaque détecteur étant constitué d'une chambre (4.1 ; 4.2) emplie de gaz et disposée, respectivement en aval des cuvettes, sur le trajet du faisceau de mesure et du faisceau de référence, et
- les deux chambres d'un détecteur communiquant ensemble par un conduit comportant un détecteur de pression ou de débit (5), les chambres (4.1) du premier détecteur (D1) dans la direction du faisceau, contenant, en une concentration fabile, un gaz correspondant, du point de vue de l'absorption, aux constituants du gaz de mesure à déterminer, et les chambres (4.2) du second détecteur (D2) dans la direction du faisceau contenant un gaz de ce genre en une concentration plus grande,
- une unité d'exploitation (8) destinée à exploiter le signal de sortie du détecteur de pression ou de débit,
caractérisé en ce que,
la sortie de l'un des détecteurs de pression ou de débit (5) peut être branchée au choix sur l'unité d'exploitation (8) en fonction de la concentration des constituants du gaz de mesure à déterminer.
